# EUROPÄISCHE PATENTSCHRIFT

(11) **EP 0 624 046 B1**
(45) Veröffentlichungstag und Bekanntmachung des Hinweises auf die Patenterteilung: **15.10.1997**
(21) Anmeldenummer: 94106575.7
(22) Anmeldetag: 27.04.1994
(51) Int. Cl.: H04R 3/00, H04R 1/40, B60R 11/02

(54) **Geräuschkompensierte Freisprechanlage in Kraftfahrzeugen**
Noise-compensated hands-free communication apparatus in motor vehicles
Appareil de communication mains libres avec compensation de bruit dans des véhicules automobiles

(30) Priorität: 06.05.1993 DE 4315000
(43) Veröffentlichungstag der Anmeldung: 09.11.1994
(73) Patentinhaber: ADAM OPEL AG, 65423 Rüsselsheim (DE)
(72) Erfinder: Andrae, Hans-Peter, Dipl.-Ing., D-60594 Frankfurt (DE)
(74) Vertreter: Kümpfel, Heinz, Dipl.-Ing.

(56) Entgegenhaltungen:
- EP-A- 0 368 291
- EP-A- 0 398 595
- EP-A- 0 411 360
- EP-A- 0 472 356
- FR-A- 2 305 909
- GB-A- 2 003 363

## Beschreibung

Die Erfindung bezieht sich auf eine geräuschkompensierte Freisprechanlage in Kraftfahrzeugen, die beispielsweise Teil einer Fernsprechanlage sein kann, in einer Ausbildung gemäß dem Oberbegriff des Anspruchs 1. Eine solche Anlage ist zum Beispiel aus der DE-A-4 026 070 bekannt.

Bei aus der Praxis bekannten Freisprechanlagen wird zumindest ein Mikrofon im Innenraum eines Fahrzeugs angeordnet, um von einer Person ausgehende Schallsignale (Sprache) aufzunehmen, zu wandeln und zur Verarbeitung weiterzuleiten. Dadurch hat insbesondere der Fahrer des Kraftfahrzeugs die Möglichkeit, ohne Gebrauch seiner Hände zu telefonieren oder auch auf Band zu sprechen. Hier besteht aber das Problem, daß im Innenraum des Kraftfahrzeugs erhebliche Störsignale auftreten können. Dies sind beispielsweise Motor- oder Windgeräusche. Die Störsignale beeinflussen die Qualität der zu übertragenden Nutzsignale (Sprache) negativ, da sie auch vom Mikrofon erfaßt werden. Man versucht, Abhilfe zu schaffen, indem spezielle Richtmikrofone eingesetzt werden, die auf die jeweils sprechende Person auszurichten sind. Dies kann aber nicht verhindern, daß die die Nutzsignale überlagernden Störsignale in voller Stärke mit verarbeitet bzw. übertragen werden. Die Qualität der Übertragung der Nutzsignale läßt somit zu wünschen übrig.

Die Anlage nach DE-A-40 26 070 ist relativ aufwendig, insbesondere wenn sie für den Einsatz in Kraftfahrzeugen vorgesehen ist. Hier soll eine Wirkung von Störsignalen, die von periodisch auftretenden Geräuschwellen verursacht werden, auf den Geräuschpegel im Fahrzeuginnern verringert werden. Dazu ist ein Rechner vorgesehen, der einer von mehr als einem Mikrofon aufgenommenen Störfrequenz gleichfrequente, aber gegenphasige Signale erzeugt, die Lautsprechern im Innenraum des Kraftfahrzeugs zugeführt werden. Die Störfrequenz wird insbesondere im Bereich eines virtuellen Mikrofonortes am Kopf einer Person ermittelt. Die hier beschriebene, aufwendige Anlage ist nicht geeignet, eine Vielzahl von möglichen Störsignalen zu eliminieren, da jeweils immer nur ein Störsignal einer Frequenz in der Wirkung vermindert wird. Da die Störsignale aber unterschiedliche Frequenzen aufweisen können oder unperiodisch auftreten, würde sich keine deutliche Verbesserung des Nutzsignals, das von Mikrofonen einer Freisprechanlage aufgenommen und übertragen sowie anschließend verarbeitet wird, ergeben.

Aus der FR-A-2 305 909 ist eine Mikrofonanlage mit zwei Mikrofonen bekannt, die automatisch abgeschaltet wird, wenn Sprachsignale nicht den Geräuschpegel der Umgebung überlagern. So wird erreicht, daß die Störgeräusche nicht andauernd übertragen werden. Wenn gesprochen wird, werden jedoch störende Umgebungsgeräusche mit in ein Kommunikationsnetz eingespeist. Die beiden nebeneinander eingesetzten Mikrofone sollten unterschiedlich von der Stimme, jedoch gleich von Umgebungsgeräuschen beeinflußt werden, indem ein Mikrofon einen Deflektor bzw. eine Abdeckung aufweist. Ein Signalvergleich ermöglicht dann die Ausführung der genannten Schaltfunktion.

Es ist Aufgabe der Erfindung, eine unaufwendige geräuschkompensierte Freisprechanlage für den Einsatz in Kraftfahrzeugen zu schaffen, durch die im wesentlichen nur Nutzsignale (Sprache) zur Weiterverarbeitung abgegeben werden, ohne daß die Nutzsignale nennenswert von im Innenraum des Kraftfahrzeugs auftretenden Störsignalen überlagert sind.

Zur Lösung dieser Aufgabe zeichnet sich die erfindungsgemäße geräuschkompensierte Freisprechanlage durch die im kennzeichnenden Teil des Anspruchs 1 angegebenen Merkmale aus. Weitere vorteilhafte Ausgestaltungen ergeben sich aus den Ansprüchen 2 bis 4.

Untersuchungen haben ergeben, daß sich ein Schallfeld, bestehend aus Schallwellen unterschiedlichsten Ursprungs (Umgebungsschall, Wind- und Motorgeräusche, etc.), im Innenraum eines Kraftfahrzeugs nahezu symmetrisch bezüglich einer Vertikalebene ausbildet, die etwa fahrtrichtungsparallel durch die Fahrzeugmitte verläuft. Sollen Nutzsignale (Sprache) durch eine Freisprechanlage aufgenommen werden, ergeben sich Störsignale, die aus dem Schallfeld im Innenraum resultieren. Die erfindungsgemäße Freisprechanlage kompensiert die Störsignale nahezu vollständig, indem deren annähernd symmetrische Verteilung im Fahrzeuginnenraum ausgenutzt wird. Es werden zwei Mikrofone, insbesondere Richtmikrofone, im Innenraum des Fahrzeugs derart angeordnet, daß sie symmetrisch zu der genannten Vertikalebene ausgerichtet sind. Vorzugsweise wird eines der Richtmikrofone auf den Kopf des Fahrers ausgerichtet und das zweite Richtmikrofon entsprechend dazu etwa auf den Kopf des Beifahrers. Aufgrund der Verteilung des Schallfeldes im Kraftfahrzeug-Innenraum ist zu erwarten, daß beide Richtmikrofone annähernd gleiche Signale aus diesem Schallfeld empfangen, die als Störsignale zu werten sind. Vom Fahrer oder vom Beifahrer ausgehende Schallsignale, die Nutzsignale darstellen, werden sich aufgrund der Sitzanordnung nicht symmetrisch zu der Vertikalebene im Kraftfahrzeug-Innenraum verteilen. Sie werden vorrangig von nur einem der Richtmikrofone erfaßt. Die Erfindung sieht nun vor, die von den beiden einzelnen Richtmikrofonen aufgenommenen Schallsignale in einer Einrichtung zur Signalverarbeitung voneinander zu subtrahieren und nur das Differenzsignal als Nutzsignal weiterzuleiten. Die aufgenommen Schallsignale können zeitlich vor oder nach der Differenzbildung verstärkt werden. Durch die Subtraktion der von den Richtmikrofonen aufgenommenen Signale wird erreicht, daß gleiche, von beiden Richtmikrofonen aufgenommene Signale eliminiert werden, unterschiedliche Signale aber erhalten bleiben. Durch die Symmetrie des Schallfeldes und die Anordnung der Richtmikrofone werden Störsignale annähernd vollständig eliminiert. Vom Fahrer oder Beifahrer ausgehende Schallsignale werden als Nutzsignale weitergeleitet, da diese vorrangig von nur einem Richtmikrofon aufgenommen werden. Da diese Schallsignale deutlich schwächer von dem jeweils anderen Mikrofon aufgenommen werden, kann es nach Differenzbildung zu einer geringfügigen Schwächung des Nutzsignals kommen, die aber durch Verstärkung auszugleichen ist. Somit wird erreicht, daß Störsignale aus einem Schallfeld im Kraftfahrzeug-Innenraum, die gleichzeitig mit Nutzsignalen (Sprache) aufgenommen werden, vor der Weiterleitung bzw. Weiterverarbeitung eliminiert werden und ausschließlich das Nutzsignal in guter Qualität zur Verfügung steht. Dieses Nutzsignal kann beispielsweise über eine Fernsprechanlage weitergeleitet oder auch auf Band gespeichert werden.

Im folgenden wird ein Ausführungsbeispiel der Erfindung näher beschrieben. In der dazugehörigen Zeichnung ist ein Querschnitt durch ein Kraftfahrzeug schematisch dargestellt, wobei der Schnitt im Bereich hinter den Vordersitzen angelegt wurde und der vordere Bereich des Innenraumes sichtbar ist.

In bekannter Weise sind ein Fahrersitz 1 und ein Beifahrersitz 2 angeordnet. Details der Innenraumausstattung des Kraftfahrzeugs sind nicht wesentlich für die Erfindung. Von Bedeutung ist, daß ein Schallfeld, welches aus verschiedenen Schallsignalen besteht, annähernd symmetrisch zu einer Vertikalebene 3 ausgebildet ist. Die Vertikalebene 3 liegt etwa fahrzeugmittig und ist fahrtrichtungsparallel ausgerichtet. Die exakte Lage der Vertikalebene 3 wird etwas davon beeinflußt, welche Plätze des Kraftfahrzeugs besetzt sind. Die Vertikalebene 3 kann also geringfügig aus der Fahrzeugmitte verschoben sein. Im Bereich eines Innenspiegels 4 sind zwei Mikrofone 5, 6, vorzugsweise Richtmikrofone 5, 6, derart spiegelbildlich zu der Vertikalebene 3 angeordnet, daß Schallsignale in spiegelbildlich zu der Vertikalebene 3 gelegenen Bereichen 7, 8 aufnehmbar sind. Vorzugsweise befinden sich die Aufnahmeköpfe der Richtmikrofone 5, 6 unmittelbar nebeneinander. Ist dies nicht der Fall, muß der Abstand der Richtmikrofone 5, 6 voneinander auf die entscheidenden Wellenlängen der aufzunehmenden Schallsignale abgestimmt werden, was auch möglich ist.

Die Richtmikrofone 5, 6 sind im Ausführungsbeispiel unmittelbar gekoppelt mit einer Einrichtung 9 zur verarbeitung. Die empfangenen Schallsignale werden an diese Einrichtung 9 (evtl. bereits in verstärkter Form) übertragen. In der Einrichtung 9 findet eine Differenzbildung zwischen dem Signal, das vom Richtmikrofon 5 aufgenommen wurde und dem Signal, das vom Richtmikrofon 6 aufgenommen wurde, statt. Das Ergebnis der Differenzbildung wird als Nutzsignal weitergeleitet und kann beispielsweise als Signal für den Fernsprechverkehr genutzt werden oder auch auf Tonband gespeichert werden.

Erfindungswesentlich ist die symmetrische Anordnung der Richtmikrofone 5, 6 zu der Vertikalebene 3. Störsignale wie Motorgeräusche oder Windgeräusche werden von beiden Richtmikrofonen 5, 6 annähernd gleich erfaßt und bei der Differenzbildung eliminiert. Sie verfälschen somit nicht das Nutzsignal, das sich sich-beispielsweise aus dem Sprechen des Fahrers oder des Beifahrers ergibt. Diese Schallsignale verteilen sich nicht symmetrisch zu der Vertikalebene 3 im Innenraum des Kraftfahrzeugs und werden daher vorrangig nur von einem der Richtmikrofone 5 oder 6 aufgenommen. Vorteilhaft ist es, die Richtmikrofone 5, 6 derart auszurichten, daß Schallsignale aus dem Kopfbereich des Fahrers bzw. Beifahrers aufgenommen werden.

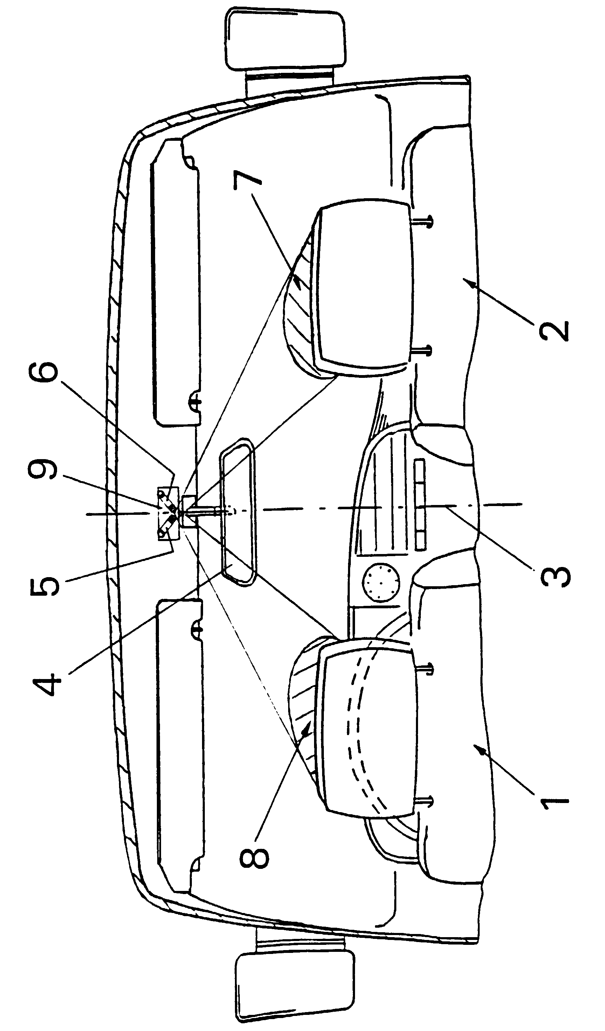

Es kann vorgesehen sein, die Ausrichtung beider Richtmikrofone 5, 6 gleichzeitig zu verändern, wenn entsprechender Bedarf besteht. Dies ist in der Zeichnung nicht gezeigt. Die Richtmikrofone 5, 6 sind beispielsweise auch mechanisch mit der Einrichtung 9 gekoppelt. Durch bekannte technische Mittel ist erreichbar, daß beim Verschwenken eines Richtmikrofons 5 oder 6 das jeweils andere Richtmikrofon 6 oder 5 automatisch entgegengesetzt verschwenkt wird, so daß die Symmetrie zu der Vertikalebene 3 erhalten bleibt und somit die Störsignale immer nahezu vollständig eliminiert werden.

## Patentansprüche

1. Geräuschkompensierte Freisprechanlage in Kraftfahrzeugen mit zwei Mikrofonen (5, 6) zur Wandlung von Schallsignalen, wobei die Mikrofone (5, 6) vorzugsweise als Richtmikrofone ausgelegt sind, **dadurch gekennzeichnet**, daß die Mikrofone (5, 6) symmetrisch zu einer etwa fahrzeugmittig und fahrtrichtungsparallel gelegenen Vertikalebene (3) durch das Kraftfahrzeug im Innenraum des Kraftfahrzeugs angeordnet sind und die von den Mikrofonen (5, 6) gewandelten sowie ggf. verstärkten Schallsignale in einer Signalverarbeitungseinrichtung (9) voneinander subtrahiert werden, und daß diese Signaldifferenz als Nutzsignal weitergeleitet wird.

2. Geräuschkompensierte Freisprechanlage in Kraftfahrzeugen nach Anspruch 1, **dadurch gekennzeichnet**, daß die Mikrofone (5, 6) im Bereich eines Innenspiegels (4) angeordnet sind.

3. Geräuschkompensierte Freisprechanlage in Kraftfahrzeugen nach Anspruch 1 oder 2, **dadurch gekennzeichnet**, daß eines der Mikrofone (5, 6) auf den Kopf des Fahrers ausrichtbar ist.

4. Geräuschkompensierte Freisprechanlage in Kraftfahrzeugen nach zumindest einem der Ansprüche 1 bis 3, **dadurch gekennzeichnet**, daß die Mikrofone (5, 6) begrenzt verschwenkbar im Innenraum des Kraftfahrzeugs gehaltert sind derart, daß beim Verschwenken eines Mikrofons (5, 6) das andere Mikrofon (6, 5) automatisch gegenläufig so verschwenkt wird, daß die Symmetrie zu der Vertikalebene (3) immer erhalten bleibt.

## Claims

1. Noise-compensated handsfree speech system in motor vehicles with two microphones (5, 6) for the conversion of sound signals, the microphones (5, 6) being preferably designed as directional microphones, characterised in that the microphones (5, 6) are arranged symmetrically to a vertical plane (3) through the motor vehicle in the interior of the motor vehicle, which is located more or less at the centre of the vehicle and parallel to the direction of travel, and the sound signals converted by the microphones (5, 6) and if necessary amplified are subtracted from each other in a signal processing device (9), and in that this signal difference is transmitted as the wanted signal.

2. Noise-compensated handsfree speech system in motor vehicles according to claim 1, characterised in that the microphones (5, 6) are arranged in the region of an interior mirror (4).

3. Noise-compensated handsfree speech system in motor vehicles according to claim 1 or 2, characterised in that one of the microphones (5, 6) can be aligned with the driver's head.

4. Noise-compensated handsfree speech system in motor vehicles according to one or more of claims 1 to 3, characterised in that the microphones (5, 6) are mounted with limited pivotability in the interior of the motor vehicle in such a way that, when one microphone (5, 6) is pivoted, the other microphone (6, 5) is automatically pivoted in the opposite direction in such a way that the symmetry to the vertical plane (3) is always preserved.

## Revendications

1. Installation de communication mains libres à compensation de bruit destinée à des véhicules automobiles, comportant deux microphones (5, 6) pour la conversion de signaux acoustiques, les microphones (5, 6) étant de préférence des microphones directionnels, caractérisée par le fait que les microphones (5, 6) sont disposés symétriquement par rapport à un plan vertical (3) disposé sensiblement au milieu du véhicule et s'étendant parallèlement à la direction de déplacement, dans l'habitacle du véhicule, que les signaux acoustiques convertis par les microphones (5, 6) et événtuellement des signaux acoustiques amplifiés sont soustraits les uns des autres dans un dispositif (9) de traitement de signal et que la différence de signal est transmise en tant que signal utile.

2. Installation de communication mains libres à compensation de bruit destinée à des véhicules automobiles selon la revendication 1, caractérisée par le fait que les microphones (5, 6) sont disposés dans la région d'un réroviseur intérieur (4).

3. Installation de communication mains libres à compensation de bruit destinée à des véhicules automobiles selon la revendication 1 ou 2, caractérisée par le fait que l'un des microphones (5, 6) peut être dirigé vers la tête du conducteur.

4. Installation de communication mains libres à compensation de bruit destinée à des véhicules automobiles selon au moins une des revendications 1 à 3, caractérisée par le fait que les microphones (5, 6) sont fixés dans l'habitacle du véhicule avec possibilité de pivotement limité, de telle sorte que lorsqu'on fait pivoter l'un des microphones (5, 6), l'autre microphone (5, 6) pivote automatiquement dans le sens opposé afin que la symétrie par rapport au plan vertical (3) soit toujours conservée.
